(19) Europäisches Patentamt
European Patent Office
Office européen des brevets

(11) **EP 2 452 454 B1**

(12) **EUROPEAN PATENT SPECIFICATION**

(45) Date of publication and mention
of the grant of the patent:
**03.04.2013 Bulletin 2013/14**

(51) Int Cl.:
***H04J 14/02*** *(2006.01)*

(21) Application number: **09780262.3**

(22) Date of filing: **07.07.2009**

(86) International application number:
**PCT/EP2009/058608**

(87) International publication number:
**WO 2011/003443 (13.01.2011 Gazette 2011/02)**

(54) **IMPROVED POWER ALLOCATION IN OPTICAL FIBER TRANSMISSION**

VERBESSERTE LEISTUNGSZUWEISUNG IN DER GLASFASERÜBERTRAGUNG

RÉPARTITION DE PUISSANCE AMÉLIORÉE DANS LA TRANSMISSION PAR FIBRES OPTIQUES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**16.05.2012 Bulletin 2012/20**

(73) Proprietor: **Telefonaktiebolaget LM Ericsson (publ)**
**164 83 Stockholm (SE)**

(72) Inventor: **OLSSON, Bengt-Erik**
**S-436 55 Hovås (SE)**

(74) Representative: **Althoff, Fredrik**
**Ericsson AB**
**Patent Unit Antennas and Microwaves**
**Lindholmspiren 11**
**417 56 Göteborg (SE)**

(56) References cited:
**US-A- 5 596 436**

• **RONGQING HUI ET AL: "Subcarrier Multiplexing for High-Speed Optical Transmission" JOURNAL OF LIGHTWAVE TECHNOLOGY, IEEE SERVICE CENTER, NEW YORK, NY, US, vol. 20, no. 3, 1 March 2002 (2002-03-01), XP011030141 ISSN: 0733-8724**
• **YANG-HAN LEE: "APPLICATION OF FIBER BRILLOUIN AMPLIFIERS ON COHERENT OPTICAL WAVELENGTH DIVISION- AND SUBCARRIER-MULTIPLEXING (WDM-SCM) SYSTEM" JOURNAL OF OPTICAL COMMUNICATIONS, FACHVERLAG SCHIELE & SCHON, BERLIN, DE, vol. 13, no. 3, 1 September 1992 (1992-09-01), pages 99-103, XP000290729 ISSN: 0173-4911**
• **LOAYSSA A ET AL: "Single-Sideband Suppressed-Carrier Modulation Using a Single-Electrode Electrooptic Modulator" IEEE PHOTONICS TECHNOLOGY LETTERS, IEEE SERVICE CENTER, PISCATAWAY, NJ, US, vol. 13, no. 8, 1 August 2001 (2001-08-01) , XP011047723 ISSN: 1041-1135**

**Description**

TECHNICAL FIELD

The invention is related to optical communication in optical fibers and particularly to a system and a method for optical communication by means of an improved power allocation in an optical fiber.

BACKGROUND

Today high capacity communication by means of optical fiber in optical networks is a common phenomenon. Indeed, optical networks have become even more widespread in recent years as they are suitable for various multimedia services e.g. being accessed via the extensive use of broadband signal transmission over the Internet or similar.

Optical networks are e.g. used in connection with the so-called FTTx (Fiber To The x) technology or similar for guaranteeing Gigabit per second (Gbps) transmission speed by using optical fibers. The acronym FTTx is one of several generic terms for various network architectures that use optical fiber to replace all or part of the copper local loop usually used for last mile telecommunications. Naturally, there are many other applications for various high capacity optical fiber transmissions and the invention herein is not limited to FTTx applications.

In order to use the bandwidth of optical fibers more efficiently new transmission technologies have been developed, e.g. such as systems based on Optical subcarrier multiplexing (SCM) and similar.

Optical subcarrier multiplexing (SCM) is a scheme wherein multiple signals can be multiplexed and optically transmitted by a single modulated optical wavelength, i.e. by a single optical carrier frequency. The required multiplexing and other signal processing can be done in the radiofrequency domain (RF-domain) or in the optical domain. However, the RF-domain is advantageously used for the multiplexing and most of the signal processing, since microwave devices are less costly and more mature than optical devices. For example, the stability of a microwave oscillators and the frequency selectivity of a microwave filters are much better than their optical counterparts. The corresponding conditions are equally valid at the receiving end.

Document RONGQING HUI ET AL: "Subcarrier Multiplexing for High-Speed Optical Transmission", JOURNAL OF LIGHTWAVE TECHNOLOGY, IEEE SERVICE CENTER, NEW YORK, NY, US, vol. 20, no. 3, 1 March 2002 (2002-03-01), XP011030141, ISSN: 0733-8724 discloses an optical Sub-Carrier Multiplexing (SCM) scheme where multiple signals are multiplexed in the Radio Frequency (RF) domain and transmitted as a composed optical signal using a single optical carrier wavelength. An optical single-sideband (OSSB) modulation scheme is used and the produced composed optical signal is received by a receiver. At the receiver, the composed optical signal is pre-amplified by a broad gain-bandwidth Erbium Doped Fiber Amplifier (EDFA) and detected by a wide band photo-detector. The carrier of the composed optical signal is attenuated and the optical carrier of the composed optical signal must not be suppressed such that the energy in the optical carrier becomes lower than the energy in the signal(s) carried by the carrier, since this would cause signal clipping. A broad gain-bandwidth Erbium Doped Fiber Amplifier (EDFA) is used at the receiver to amplify the received composed optical signal amplifying the entire composed optical signal.

Document GIAMMARCO ROSSI ET AL: "Optical SCM Data Extraction Using a Fiber-Loop Mirror for WDM Network Systems", IEEE PHOTONICS TECHNOLOGY LETTERS, IEEE SERVICE CENTER, PISCATAWAY, NJ, US, vol. 12, no. 7, 1 July 2000 (2000-07-01), XP011047199, ISSN: 1041-1135 discloses a combined Baseband/SCM (Sub-Carrier Multiplexing) signal is received in a receiver wherein the optical Baseband channel passes through a filter for further processing, routing, transmission or reinsertion of new OSCM data. Here, the Baseband signal of the combined Baseband /SCM signal is extracted using a filter that suppresses the subcarriers. Similarly, in the receiver, the OSCM extraction port produces a suppressed carrier SCM signal that is demodulated using a direct detection photo detector. The carrier suppression occurs by means of filtering in the receiver, i.e. not at the transmitting end. The Baseband channel of the combined Baseband /SCM signal is extracted at the "Trough Port" in the receiver of D5. Indeed, the extracted Baseband channel may be further transmitted. However, if the extracted Baseband channel is transmitted then it does not comprise any subcarriers. As a contrast, the subcarriers are handled by the "OSCM extraction port" that produces a "Suppressed carrier DSB SC" signal, which is demodulated and converted to an electrical signal using a direct detection photo detector. It follows that the suppressed carrier signal is not transmitted further by the receiver, at least not as an optical signal.

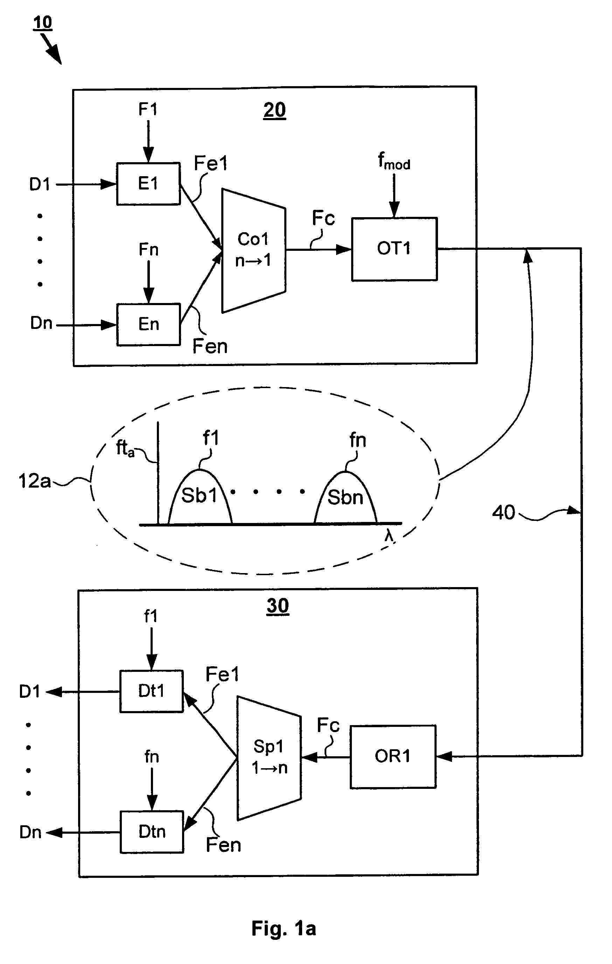

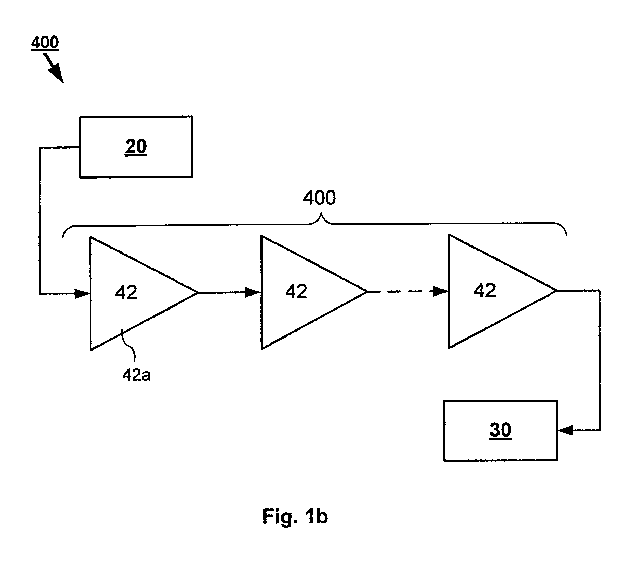

Fig. 1 a is a schematic illustration of a known exemplifying SCM-system 10 comprising an optical transmitter arrangement 20 and an optical receiver arrangement 30 connected by an optical fiber 40.

The optical transmitter arrangement 20 comprises a plurality of encoders E1 to En, each receiving a data stream D1 to Dn respectively. Preferably the input data streams D1, Dn are binary data streams. Each data stream D1, Dn is suitably converted by the encoders E1, En before being further processed.

Each encoder E1, En provides or receives another signal F1, Fn preferably having a frequency of F1, Fn respectively. Each signal F1, Fn is modulated by the received data stream D1, Dn respectively so as to produce modulated signals Fe1 to Fen. The encoders E1, En may e.g. modulate the signals F1, Fn by means of a Quadrature Phase-Shift Keying (QPSK) or Quadrature Amplitude Modulation (QAM) or some other modulation scheme of higher order.

The encoded signals Fe1 to Fen are then combined in a n → 1 combiner Co1 or similar. The combiner Co1 has n input ports and one output port. The combiner Co1 is arranged so as to operatively receive the encoded signals Fe1 to Fen at the input ports and produce a combined signal Fc at the output port.

The combined signal Fc is fed to an optical transmitter OT1, in which the combined signal Fc modulates an optical single-frequency signal $f_{mod}$ having substantially a single frequency. Typically, the single-frequency signal $f_{mod}$ is an optical laser signal.

The encoding, the combining and the optical modulation mentioned above result in an optical SCM-signal 12a. The optical SCM-signal 12a is transmitted from the optical transmitter OT1 into an optical fiber 40.

As can be seen in Fig. 1a the composed optical signal 12a comprises a transmitted optical carrier signal $f_{ta}$ that correspond to the modulated optical single-frequency signal $f_{mod}$ and a plurality of information carrying sidebands Sb1 to Sbn each comprising a representation of the encoded data streams D1, Dn respectively. The expression "signal $f_{ta}$" used herein should be interpreted as an optical signal with substantially one frequency $f_{ta}$ unless otherwise stated. It can also be seen in Fig. 1a that the composed optical signal 12a has only one set of the two possible sets of sidebands. In other words, the composed optical signal 12a is preferably a single sideband signal. It should be emphasized that the invention is equally applicable regardless if the lower set or the higher set of the two possible sets of sidebands is used. Each sideband Sb1, Sbn in Fig. 1a is substantially centered around a subcarrier frequency f1, fn respectively being used by the signals F1, Fn provided to or comprised by the encoders E1, En respectively. The observant reader realizes that the signal 12a is a result of a heterodyne process that mixes or multiplies at least one signal Fe1, Fen with another signal $f_{mod}$. This is in contrast to a homodyne process wherein no mixing or multiplication of signals is present. Thus, in a homodyne system there would only be said at least one signal Fe1, Fen and there would be no other signal $f_{mod}$ to be mixed or multiplied with said at least one signal Fe1, Fen.

The general structure and operation of optical transmitters such as the optical transmitter arrangement 20 in Fig. 1 a are well known to those skilled in the art and they need no further description. Hence, the exemplifying optical transmitter arrangement 20 arranged to operatively receive a plurality of data streams D1 to Dn and to operatively transmit a resulting composed optical signal 12a or similar needs no further description.

The attention is now directed to the optical fiber arrangement 40 of the communication system 10. The fiber arrangement 40 illustrated in Fig. 1a implies that a single fiber may be used. However, fiber arrangement 40 illustrated in Fig. 1 a intended as a schematic illustration of the various optical fiber arrangements that may be used. One such fiber arrangement may be an optical fiber link arrangement 400. Thus, the optical fiber link arrangement 400 should be seen as an embodiment of the optical fiber arrangement 40. As can be seen in Fig. 1b the fiber link arrangement 400 may comprise a plurality of optical amplifiers 42 or similar components configured to improve the quality of the signal 12a before it is received by an optical receiver arrangement 30. The total length of the optical fiber arrangement 40 may be 1000 kilometers or more. The distance before amplification is needed may be about 60-100 kilometers. Thus the distance between two amplifiers 42 may e.g. be about 60-100 kilometers.

In addition, the optical receiver arrangement 30 of the optical communication system 10 comprises an optical receiver OR1. The optical receiver OR1 detects the optical signal 12a received from the transmitter arrangement 20 so as to reproduce the combined signal Fc previously created in and transmitted from the optical transmitter arrangement 20 described above. The reproduced combined signal Fc is fed into a 1→ n splitter Sp1 or similar. The splitter Sp1 has one input port and n output ports. The splitter Sp1 is arranged so as to operatively receive the combined signal Fc at the input port and reproduce the encoded signals *Fe1* to *Fen* at the output ports. The reproduced signals *Fe1* to *Fen* correspond to the encoded signals *Fe1* to *Fen* previously created in the optical transmitter arrangement 20 described above. The encoded signals *Fe1* to *Fen* are then fed into decoders Dt1 to Dtn respectively. The decoders Dt1 to Dtn are arranged to reproduce the data streams D1 to Dn respectively described above.

The observant reader realizes that the signals Fc and Fe1-Fen and D1-Dn reproduced by the optical receiver OR1, the optical splitter Sp1 and the decoders Dt1 to Dtn are idealized representations of the corresponding transmitted signals. Naturally, the reproduced signals Fc and Fe1 to Fen and D1 to Dn may e.g. comprise various noise and/or other distortion components, e.g. attenuations and distortions caused by the transmission through the optical fiber 40 and the reproduction in the receiver OR1, the splitter Sp1 and/or the decoders Dt1 to Dtn.

The general structure and operation of optical receivers, such as the exemplifying optical receiver arrangement 30 in Fig. 1a, being arranged to operatively receive a composed optical signal 12a or similar and to operatively output a plurality of resulting data streams D1 to Dn, are well known to those skilled in the art and they need no further description.

Generally, optical transmission systems like system 10 described above (e.g. operating at 40 or 100 Gbit/s) are attractive due to the ability to utilize advanced modulation formats *e.g.* QPSK or 16-QAM without the need for optically coherent receivers. In addition, such systems allow the data to be parallelized onto multiple RF-carriers in order to further reduce the baudrate of each RF-carrier. This makes it possible to reduce the baudrate of each channel into the Digital Signal Processor (DSP) comprised by the detectors Dt1-Dtn of the receiver arrangement 30, which is of utmost importance to allow cost efficient implementation of the required DSP functions. Examples of DSP functions in optical transmission system like system 10 include data decoding, mitigation of fiber impairments like chromatic dispersion and polarization mode dispersion and implementation of forward error correction coding (FEC). Preferably, these functions should be implemented in commercially available field programmable gate arrays (FPGA) or possibly low cost CMOS ASIC:s. At the input of such DSP one or more Analog to Digital Converter (ADC) is used to digitize the analog signal and these ADCs must also be realized in a cost efficient manner, still with sufficient sampling rate and resolution.

To further reduce the cost in optical transmission systems it is common to use direct detection implementing a so-called square-law detection of the optical signal, preferably by utilizing a single photo diode or a similar detector. A square-law detector responds to the photon energy to free bound electrons. Since the energy flux scales as the square of the electric field, so does the rate at which electrons are freed.

However, one fundamental problem with direct detection of a composed optical signal such as signal 12a is that a relatively large amount of power is required in the optical carrier signal $f_{ta}$ in order to allow conversion into electrical current without distorting the signal 12a.

Thus, in order to avoid distorting the exemplifying signal 12a in Fig. 1a while using a direct detection, the carrier signal $f_{ta}$ must be large enough. The fraction of power in the carrier signal $f_{ta}$ relative to the fraction of power in the sidebands Sb1 to Sbn representing the data channels will then be very high. As much as 90% or more of the total optical power of the signal 12a may be allocated to the carrier signal $f_{ta}$.

In a practical transmission system there is a limit on the maximum optical power allowed into the optical fiber 40. The maximum optical power allowed into the optical fiber 40 is primarily limited due to fiber nonlinearities and other limiting fiber properties of the fiber arrangement 40. Input powers above this limit will cause severe signal degradation. In addition, the maximum optical power allowed into the fiber arrangement 40 from the optical transmitter OT1 may also be limited by other signals that may be simultaneously transmitted through the fiber arrangement 40, e.g. signals from other optical transmitters in a dense Wavelength Division Multiplexed (WDM) transmission system. It is worth noting that other WDM channels may carry data with different data rate and/or modulation formats and thus impact the maximum allowed optical channel input power to the transmission link. Moreover, the maximum optical power allowed into the optical fiber 40 may also be limited by the properties of possible components comprised by the fiber arrangement 40 and configured to improve the signal 12a before it is received by the optical receiver OR1. Such components or similar may also have a limit on the maximum power allowed into the component. These components may e.g. be optical amplifiers 42 or similar. Thus, particularly the first component 42a in the fiber arrangement 40 (see Fig. 1 b) may thus limit the maximum optical power transmitted by the optical transmitter arrangement 20 into the optical fiber 40. To conclude, the maximum optical power allowed into the optical fiber 40 may be limited by the fiber properties of the fiber arrangement 40, and/or by possible other signals that may be transmitted simultaneously trough the fiber arrangement 40, and/or by the properties of possible components comprised by the fiber arrangement 400. In addition, the maximum optical power allowed into the optical fiber 40 may also be limited by regulatory measures, e.g. safety regulations etc. For a person skilled in the art it is trivial to determine the maximum optical power allowed into the optical fiber 40 for each particular combination of limiting factors. In fact, this is one of the fundamental activities when designing an optical fiber arrangement 40.

However, a high power input signal may nevertheless be required to allow long distance transmission etc, since otherwise the Optical Signal to Noise Ratio (OSNR) etc at the receiving end may be too low. The resulting OSNR at the receiver depends i.a. on the total transmission distance, the number of amplifiers and distance between amplifiers, as well as the input optical power into each fiber span.

In view of the above it would be beneficial to provide a scheme according to which the optical power allocated to the information carrying parts of a signal transmitted into a fiber arrangement can be as high as possible without exceeding the maximum optical power allowed into the optical fiber while still providing an acceptable detection at the receiving end.

SUMMARY

An object of the present invention is to provide a solution that makes it possible to transmit a an optical signal into a fiber arrangement where the optical power allocated to the information carrying parts of the signal can be as high as possible without exceeding the maximum optical power allowed into the optical fiber while still providing an acceptable detection at the receiving end.

This object is at least partly achieved by a first embodiment of the invention providing a method for transmitting a composed optical signal through an optical fiber arrangement. The method comprises the steps of creating and transmitting a composed optical signal comprising one or several sidebands each substantially centered around a subcarrier, and an attenuated carrier signal, attenuated such that the composed optical signal is not linearly detectable by means of optical direct detection. The method also comprises the steps of receiving the transmitted composed optical signal and amplifying the power of the attenuated carrier signal so as to create an amplified composed optical signal that is linearly detectable by means of optical direct detection.

In addition, the above mentioned object is at least partly achieved by another embodiment of the invention providing an optical communication system comprising an optical transmitter system, an optical receiver system, and an optical fiber arrangement connecting the transmitter system and the receiver system. The transmitter system is configured to create and transmit a composed optical signal comprising one or several sidebands each substantially centered around a subcarrier, and an attenuated carrier signal ($f_{tb}$) attenuated such that the composed optical signal is not linearly detectable by means of direct detection. The receiver system comprises an optical amplification arrangement configured to receive the transmitted composed optical signal and to amplify the power of the attenuated carrier signal so as to create an amplified composed optical signal that is linearly detectable by means of optical direct detection.

Moreover, the above mentioned object is at least partly achieved by another embodiment of the invention providing an optical transmitter configured to create and transmit a composed optical signal comprising a carrier signal and one or several sidebands each substantially centered around a subcarrier. The transmitter comprises an attenuating arrangement configured to attenuate the carrier signal so as to create an attenuated composed optical signal that is not linearly detectable by means of optical direct detection.

Furthermore, the above mentioned object is at least partly achieved by another embodiment of the invention providing an optical receiver comprising an optical receiver arrangement configured to receive via an optical fiber arrangement a composed optical signal comprising a carrier signal and one or several sidebands each substantially centered around a subcarrier. The receiver comprises an optical amplification arrangement configured to receive the composed optical signal and to amplify the power of the carrier signal so as to create an amplified composed optical signal that is linearly detectable by means of optical direct detection.

Further advantages and advantageous features of the invention are disclosed in the following description and in the dependent claims.

It should be emphasized that the term "comprises/comprising" when used in this specification is taken to specify the presence of stated features, integers, steps or components, but does not preclude the presence or addition of one or more other features, integers, steps, components or groups thereof.

Similarly, the steps of the methods described herein must not necessarily be executed in the order in which they appear and embodiments of said methods may comprise more or less steps without falling outside the scope of the present invention.

BRIEF DESCRIPTION OF THE DRAWINGS

A more detailed description of the present invention is given below with reference to a plurality of exemplifying embodiments as illustrated in the appended figures, wherein:

Fig. 1a    is a schematic illustration of a known optical communication system 10 comprising an optical transmitter arrangement 20 and an optical receiver arrangement 30 connected via an optical fiber arrangement 40,

Fig. 1b    is a schematic illustration of an embodiment of the optical fiber arrangement 40 in the form of an optical fiber link arrangement 400 comprising a plurality of optical amplifiers 42,

Fig. 2a    is a schematic illustration of an exemplifying optical communication system 100a according to an embodiment of the present invention comprising an optical transmitter system 200a and an optical receiver system 300a connected via an optical fiber 40,

Fig. 2b    is a schematic illustration showing the attenuation of the a carrier signal $f_{2,carrier}$ in a composed optical signal such that an optical signal $f_s$ cannot be linearly detected by *direct detection,*

Fig. 3    is a schematic illustration of another exemplifying optical communication system 100b according to another embodiment of the present invention comprising an optical transmitter system 200a and an optical receiver system 300b connected via an optical fiber 40,

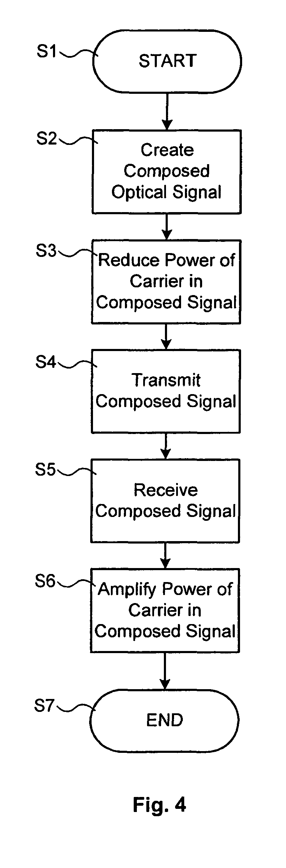

Fig. 4    is a flowchart over an optical transmission method according to an exemplifying embodiment of the present invention.

DETAILED DESCRIPTION OF PREFERRED EMBODIMENTS

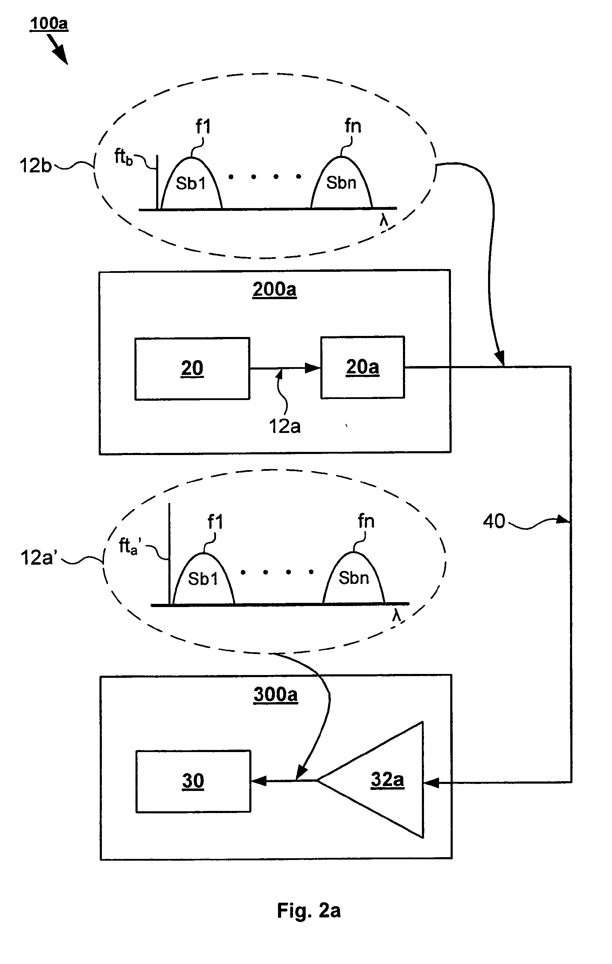

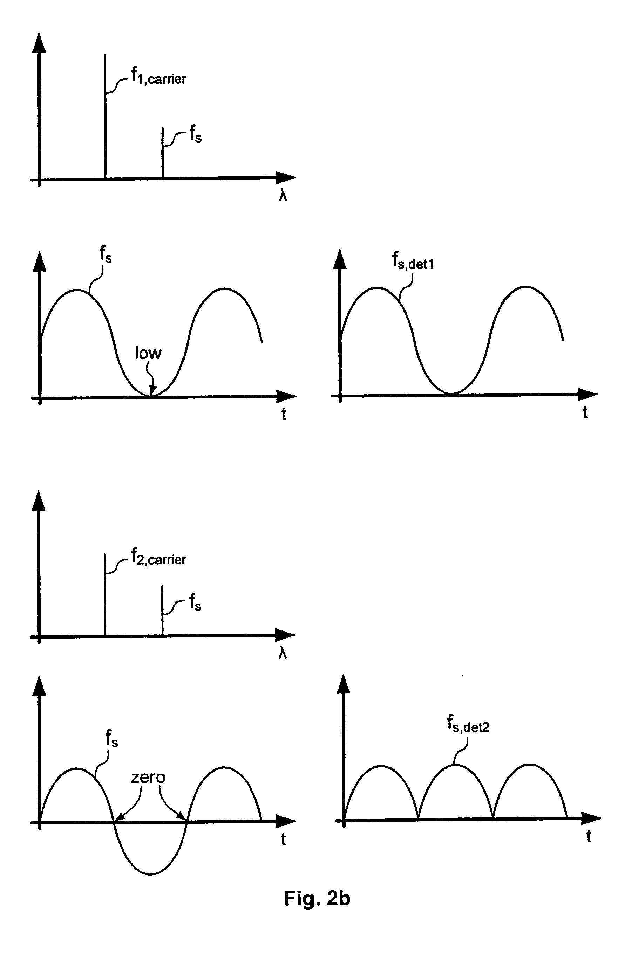

Figure 2 is a schematic illustration of an exemplifying optical communication system 100a according to an embodiment of the present invention. The system 100a comprises an optical transmitter system 200a and an optical receiver system 300a connected by an optical fiber arrangement 40.

The optical transmitter system 200a comprises an optical transmitter arrangement that is arranged to transmit a composed optical signal comprising a carrier frequency and one or several sidebands. As can be seen in Fig. 2a, the optical transmitter system 200a may e.g. comprise the known optical transmitter arrangement 20 being arranged to operatively transmit a composed optical signal 12a comprising a carrier signal $f_{ta}$ and a plurality of information carrying sidebands Sb1 to Sbn as described above with reference to Fig. 1a.

In addition, the transmitter system 200a comprises an attenuating arrangement 20a that is arranged to operatively reduce the power of the carrier signal $f_{ta}$ in the composed optical signal 12a so as to produce an output signal 12b with an optical carrier signal $f_{tb}$ having a reduced power compared to the carrier signal $f_{ta}$. Hence, in this example the optical signal 12b is the same as the optical signal 12a except that the carrier signal $f_{tb}$ has a reduced power compared to the carrier signal $f_{ta}$. The effect is that the fraction of the optical power allocated to the sidebands Sb1 to Sbn in signal 12b can be increased. The fraction of the optical power allocated to the sidebands Sb1, Sbn may e.g. be increased to an amount that is above 30% or above 40% or above 50% or above 60% or above 70% or even above 80% of the maximum optical power allowed to be transmitted into the optical fiber 40. This is still valid in case the optical signal 12a and other optical signals are transmitted simultaneously through the fiber arrangement 40, e.g. signals from optical transmitters in a dense Wavelength Division Multiplexed (WDM) transmission system.

It is preferred that the optical power of the attenuated optical signal 12b, comprising the sidebands Sb1, Sbn and the attenuated optical carrier signal $f_{tb}$, is substantially equal to the maximum optical power that is allowed to be transmitted into the optical fiber 40. The expression "substantially equal" should be interpreted such that the optical power of the attenuated optical signal 12b is within an interval of about 80-100 % of the maximum optical power that is allowed to be transmitted into the optical fiber 40. This is beneficial since a high optical power increases the Optical Signal to Noise Ratio etc at the receiving end of the fiber 40.

It is also preferred that the carrier signal $f_{tb}$ is attenuated such that the optical signal 12b cannot be detected by *direct detection,* i.e. by means of a so-called square-law detection e.g. utilizing a single photo diode or a similar detector, in order to maximize the power in the data carrying side bands.

Fig. 2b is a schematic illustration showing a composed optical signal comprising a carrier signal $f_{1,carrier}$ and another optical signal $f_s$ that is assumed to be a pure sinus signal. The carrier signal $f_{1,carier}$ has enough power to keep the low end of the sinus curve of signal $f_s$ at or above zero power as indicated by the arrow "low" in Fig. 2b. The square-law detector will then be able to detect the sinus signal $f_s$ with only modest distortion so as to produce a linearly detected photo detector current $f_{s,det\,1}$ schematically illustrated in Fig. 2b. As a contrast, if the optical power of the carrier signal $f_{1,carrier}$ is too low to keep the low end of the sinus curve of the signal $f_s$ at or above zero power then the square-law detector will *not* be able to detect the sinus signal $f_s$ in a linearly correct manner. For example, if there is substantially no carrier signal $f_{2,carrier}$ then the sinus curve of the signal $f_s$ will be centered at zero power as indicated by the arrows "zero" in Fig. 2b, and the square-law detector will then *not* be able to detect the sinus signal $f_s$ in a linearly correct manner. Rather the square-law detector will detect a signal $f_{s,dec\,2}$ that resembles a full-wave rectifying as schematically illustrated in Fig. 2b.

The attenuating arrangement 20a may e.g. be implemented by means of an optical transmitter OT1 in the transmitter arrangement 20 based on a Mach-Zehnder transmitter. As is well known to those skilled in the art, a Mach-Zehnder transmitter may transmit a carrier signal $f_{tb}$ with reduced power if the bias of the Mach-Zehnder transmitter is adjusted. Alternatively, the attenuating arrangement 20a may be implemented by means of a narrow band-rejection optical filter centered at the center frequency of the carrier signal $f_{ta}$. The narrow band may be less than 50MHz, or less than 100 MHz, or less than 200 MHz, or less than 300 MHz, or less than 400 MHz or less than 500 MHz. This is particularly so in case the carrier signal $f_{ta}$ to be attenuated has frequency of about 10-40 GHz. The structure and operation of such narrowband filters are well known to those skilled in the art. Another alternative is to use electronic signal processing in front of the optical transmitter arrangement 20 to produce a carrier signal $f_{tb}$ with reduced power. However, this requires a two port optical modulator, e.g. a nested Mach-Zehnder modulator.

The reduced power of the carrier signal $f_{tb}$ has been illustrated in Fig. 2a comprising a schematic graph of the signal 12b showing a bar representing the carrier signal $f_{tb}$ and a first half ellipse representing a first sideband Sb1 and a second half ellipse representing a nth sideband Sbn. In the graph, wavelength is represented on the x-axis, whereas power is represented on the y-axis (e.g. in a logarithmic representation). This and similar representations are well known to those skilled in the art. The bar representing the carrier signal $f_{tb}$ is of substantially the same height as the maximum height of the half ellipses representing the sidebands Sb1, Sbn respectively. This is in clear contrast to the corresponding schematic graph of signal 12a shown in Fig. 1a, wherein the bar representing the carrier signal $f_{ta}$ is substantially higher than the maximum height of the half ellipses representing the sidebands Sb1, Sbn respectively.

The attention is now directed to the optical fiber arrangement 40 in Fig. 2a. It is preferred that the optical fiber arrangement 40 comprises at least one optical fiber of substantially any kind known by those skilled in the art to be suitable for transmission of optical signals in an optical network. The optical network may e.g. be FTTx (Fiber To The x) networks or similar preferably guaranteeing Gigabit per second (Gbps) transmission speed by using optical fibers as mentioned in the Background section above.

The optical fiber arrangement 40 receives the exemplifying composed optical signal 12b for a further transport to the optical receiver system 300a. Here, a high power input signal may be required in case of long distance transmissions etc. Otherwise the Optical Signal to Noise Ratio (OSNR) at the receiving end may be too low. However, as indicated in the Background section there is a limit on the maximum optical power that can be allowed into the optical fiber 40 due to fiber nonlinearities etc. As also indicated in the Background section, as much as 90% of the total optical power of the signal 12a may be allocated to the carrier signal $f_{tb}$ in a conventional sub-carrier multiplexed (SCM) system.

These facts are utilized by the invention in that the carrier signal $f_{tb}$ has been given a reduced power as descried above.

However, it is not an obvious measure to use a carrier signal $f_{tb}$ with a reduced optical power since this reduces the probability of achieving a successful detection of the signal 12b at the receiving end. If the optical power of the carrier signal $f_{tb}$ is too low severe clipping etc will occur in the detector of the optical receiver OR1. This is particularly so if a direct detection is used as described in the Background section. Thus, in known systems it is preferred to maximize the power of the input signal, e.g. to allow long distance transmission. Thus, reducing the power of the carrier signal $f_{ta}$ of an optical signal 12a to be transmitted is not desired in known optical transmission systems. However, this is actually desired in an optical communication system according to embodiments of the present invention.

We will now proceed to the optical receiver system 300a in Fig. 2a. The optical receiver system 300a may comprise any optical receiver arrangement that is arranged to operatively receive a composed optical signal comprising at least one carrier frequency and one or more sidebands. Thus, as can be seen in Fig. 2a, the optical receiver system 300a may e.g. comprise the known optical receiver arrangement 30 being arranged to receive the optical signal 12b comprising a carrier signal $f_{tb}$ and a plurality of information carrying sidebands Sb1 to Sbn as indicated above with reference to Fig. 1a. It is evident that the signal 12b is received via the optical fiber arrangement 40.

However, as previously described the power of the carrier signal $f_{tb}$ in the transmitted signal 12b has been reduced so as to avoid exceeding the maximum optical power that is allowed into the optical fiber 40. As also indicated above, the reduced power of the carrier signal $f_{tb}$ may lead to a deteriorated detection that distorts the signal 12b and particularly the information carried in the sidebands Sb1 to Sbn, especially if a direct detection is used.

This is recognized and mitigated by the invention in that a narrowband optical amplification arrangement 32a has been introduced into the optical receiver system 300a in Fig. 2a.

The optical amplification arrangement 32a is arranged to receive the signal 12b and to amplify the power of the carrier signal $f_{tb}$ so as to produce an amplified carrier signal $f_{ta}'$ while leaving the sidebands Sb1 to Sbn of the signal 12b substantially unaffected. The amplified carrier signal $f_{ta}'$ and the sidebands Sb1 to Sbn form an amplified composed signal 12a'. The power of the amplified carrier signal $f_{ta}'$ may be lower or higher or substantially the same as the power of the original un-attenuated carrier signal $f_{ta}$ of the signal 12a to be transmitted. However, the power of the amplified carrier signal $f_{ta}'$ is always higher than the reduced power of the attenuated carrier signal $f_{tb}$.

It is preferred that the amplification of the narrowband amplification arrangement 32a is centered at the center frequency of the carrier signal $f_{tb}$. The narrow band may be a band of less than 50MHz, or less than 100 MHz, or less than 200 MHz, or less than 300 MHz, or less than 400 MHz or less than 500 MHz. This is particularly so in case of a carrier signal $f_{tb}$ with a center frequency of about 10-40 GHz. The narrowband amplification arrangement 32a according to the embodiment in Fig. 2a may e.g. be a Semiconductor Optical Amplifier (SOA), e.g. such as a Vertical-Cavity SOA (VCSOA) or some other wavelength selective SOA.

The amplified composed signal 12a' is provided from the amplification arrangement 32a to the optical receiver arrangement 30 of the receiver system 300a. The observant reader realizes that the amplified composed signal 12a' is an idealized representation of the transmitted composed signal 12b. The amplified signal 12a' may e.g. comprise distortion components that are not present in the transmitted signal 12b, e.g. distortions caused by the transmission through the optical fiber 40 and/or by the narrowband amplification arrangement 32a etc.

The amplified composed signal 12a' has been illustrated in Fig. 2a comprising an schematic graph showing a bar representing the amplified carrier signal $f_{ta}'$ and a first half ellipse representing a first sideband Sb1 and a second half ellipse representing a nth sideband Sbn. In the graph, wavelength is represented on the x-axis whereas power is represented on the y-axis (e.g. in a logarithmic representation). The bar representing the exemplifying carrier signal $f_{ta}'$ is higher than the peak or maximum height of the half ellipses representing the sidebands Sb1, Sbn respectively. It can be readily understood that the amplified carrier signal $f_{ta}'$ is an amplified version of the received carrier signal $f_{tb}$ in turn being a attenuated version of the carrier signal $f_{ta}$.

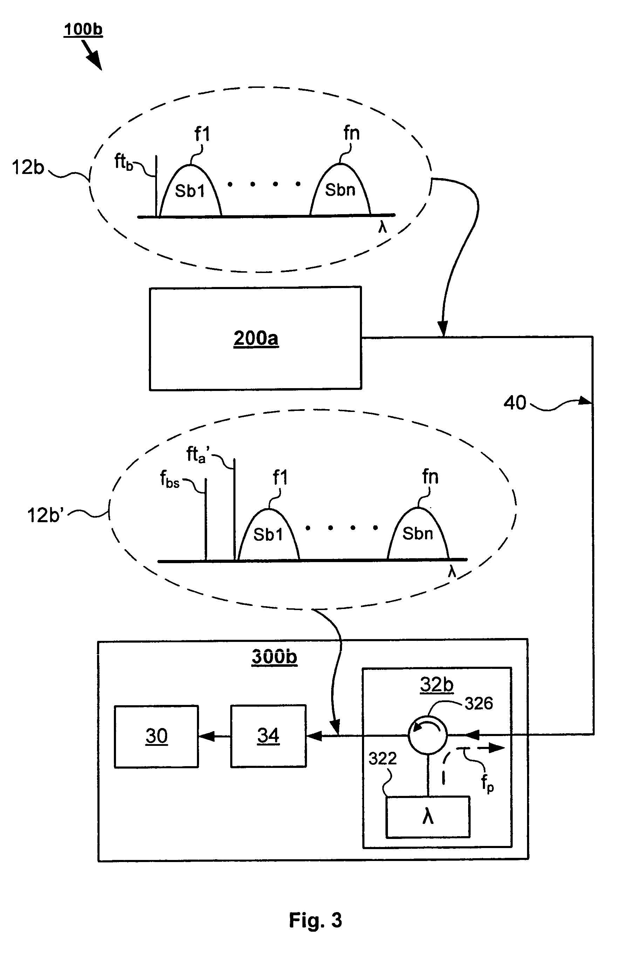

The attention is now directed to Fig. 3, which is a schematic illustration of a second embodiment of the present invention in the form of another exemplifying communication system 100b. The system 100b comprises an optical transmitter system 200a and an optical receiver system 300b connected to each other by an optical fiber arrangement 40.

Preferably, the optical transmitter system 200a and the optical fiber arrangement 40 are the same as those described above with reference to Fig. 2a. It is similarly preferred that the optical receiver system 300b is the same as the optical receiver system 300a described above with reference to Fig. 2a. However, the narrowband optical amplification arrangement 32a in system 300a has been replaced in the system 300b by an alternative narrowband optical amplification arrangement 32b being advantageously based on the Stimulated Brillouin Scattering (SBS) effect.

The use of Stimulated Brillouin Scattering to amplify an optical signal in an optical fiber is well known *per se* to those skilled in the art and it needs no detailed description. However, a brief overview will be given below.

Assume that the input optical power of an signal in an optical fiber exceeds the SBS threshold, then the forward going optical signal will be scattered back due to its interaction with an acoustic grating generated via an eletrostrictive effect. Since the acoustic grating is moving in the direction of the optical input signal, the frequency of the backscattered light will be influenced by a Doppler effect causing a Brillouin frequency shift, which in a single-mode optical fiber may be expressed as:

$$v_B = 2nv_a / \lambda_p \qquad (1)$$

where $v_a$ is the speed of the acoustic wave in the fiber, $n$ is the refractive index of the fiber, and $\lambda_p$ is the wavelength of the optical input signal, in this connection often called the SBS pump signal.

Now, assume that a narrow-band seed signal $V_{seed}$ with a frequency of

$$V_{seed} = VP - v_B \qquad (2)$$

is injected into the optical fiber in the opposite direction of the propagation of the SBS pump signal, where $VP$ is the frequency of the SBS pump signal. The interaction of the seed signal $V_{seed}$ with the SBS pump signal $VP$ will greatly enhance the induced acoustic grating, causing more backscattering of the pump signal $VP$ into the seed signal and effectively amplifying the seed signal $V_{seed}$.

In other words, the influence of the seed signal $V_{seed}$ converts the spontaneous Brillouin Scattering from the SBS pump signal $VP$ into a Stimulated Brillouin Scattering (SBS), where the stimulated backscattering light will add up in phase with the seed signal $V_{seed}$ and greatly amplify the seed signal. This process is called Brillouin amplification. Typically the Brillouin amplification in optical fibers has a narrow bandwidth of less than 200 MHz, or even less than 150 MHz or even less than 50 MHz.

It is apparent from Fig. 2a that the SBS amplification arrangement 32b comprises an optical pump source 322 and an optical circulator arrangement 326.

The optical pump source 322 is arranged to transmit an optical Brillouin pump signal $f_p$. It is preferred that the Brillouin pump signal $f_p$ has a single frequency. It is also preferred that the optical pump source 322 is a laser source transmitting a laser based pump signal $f_p$. The optical pump source 322 may be fixed or tunable.

The optical circulator arrangement 326 is connected to the optical pump source 322 and to the optical fiber 40 and to the optical receiver arrangement 30. The properties of optical circulators are well known to those skilled in the art and they need no further description. The optical circulator arrangement 32 directs the Brillouin pump signal $f_p$ into the optical fiber 40 towards the transmitter system 200a, whereas the circulator arrangement 32 directs the composed signal 12b and any backscattered signals of the pump signal $f_p$ into the optical receiver arrangement 30. A skilled person having the benefit of this disclosure realizes that the optical circulator arrangement 326 may be replaced by an optical directional coupler or a similar optical directional arrangement having the directional properties as now described.

Given the structure of the SBS amplification arrangement 32b a Brillouin amplification will occur if the pump signal $f_p$ and the carrier signal $f_{tb}$ of the composed signal 12b are appropriately adjusted with respect to each other. According to expressions (1) and (2) above, a Brillouin amplification of the carrier signal $f_{tb}$ occurs if the pump signal $f_p$ is adjusted to a frequency $VP$ causing a Brillouin frequency shift of $v_B$ such that $f_{tb} = VP - v_B$. In practice, a Brillouin amplification of the carrier signal $f_{tb}$ can be easily obtained and determined by e.g. varying the pump signal $f_p$ until the carrier signal $f_{tb}$ is amplified. The result is an amplification of the composed optical signal 12b creating an amplified composed optical signal 12b' illustrated in Fig. 3.

In essence the amplified signal 12b' is the same as the amplified signal 12a described above with reference to Fig. 2a, except that the power of the amplified carrier signal $f_{ta}$' may be lower or higher or substantially the same as the power of the original un-attenuated carrier signal $f_{ta}$ of the signal 12a to be transmitted. However, the power of the amplified carrier signal $f_{ta}$' is always higher than the reduced power of the attenuated carrier signal $f_{tb}$.

In addition to the Brillouin amplification of the carrier signal $f_{tb}$ as described above the Brillouin pump signal $f_p$ may also cause backscatter of other residual optical signals into the receiver system 300b, e.g. Rayleigh backscatter. This has been schematically illustrated in Fig. 2a by a bar labeled $f_{bs}$ being arranged to the left of the bar labeled $f_{ta}$' representing an amplified version of the carrier signal $f_{tb}$. The fact that the bar labeled $f_{bs}$ is located to the left indicates that the exemplifying residual signal $f_{bs}$ may have a lower frequency then the amplified carrier signal $f_{ta}$'. It is preferred that residual backscattered signals such as the signal $f_{bs}$ are removed, e.g. by being filtered. Thus the residual backscattered signal $f_{bs}$ may be removed by a filter arrangement 34 attenuating or removing any residual backscattered signal $f_{bs}$. The filter arrangement 34 may e.g. be a high-pass filter or a band-rejection optical filter centered at the backscattered signal $f_{bs}$.

Another problem associated with the exemplifying optical communication system 100b is caused by the very narrow bandwidth of the Brillouin amplification. The very narrow bandwidth of the amplification makes it difficult to center the amplification of the amplification arrangement 32b onto the carrier signal $f_{tb}$. Naturally, this difficulty increases as the bandwidth of the Brillouin amplification becomes narrower and/or the frequency of the carrier signal $f_{tb}$ is less stable. According to an embodiment of the present invention this problem can be mitigated by stagger the pump signal $f_p$ so as to broaden the effective bandwidth of the Brillouin amplification. The stagger may e.g. be performed by repeatedly tuning the frequency of the pump signal $f_p$ from a first lower frequency to a second higher frequency. Preferably, the first frequency is lower than the assumedly correct SBS pump frequency $VP$, whereas the second frequency is higher than the assumedly correct SBS pump frequency $VP$. The tuning may e.g. be substantially continuous. Alternatively, the tuning may e.g. be performed by switching between the first frequency and the second frequency.

Having the benefit of the discussion above it is evident to a skilled person that a composed optical signal 12b having a carrier signal $f_{tb}$ with reduced power can be transmitted without deteriorating the performance at the detecting end by using a method comprising the following steps:

In a first step S1 initial measures are preformed. One initial measure is to provide an optical communication system 100a, 100b capable of reliable communicating a composed optical signal 12b comprising an attenuated carrier signal $f_{tb}$ and one or several sidebands Sb1, Sbn. Here it should be emphasized that the invention is equally applicable regardless if the lower or the higher sidebands is used, except in case of SBS amplification when the sideband side without residual optical signals $f_{bs}$ is chosen.

In a second step S2, a first composed optical signal 12a is created as previously described. The composed optical signal 12a may e.g. be created by encoders E1 to En and a combiner Co1 as also previously described.

In a third step S3 the power of the carrier signal $f_{ta}$ in the first composed signal 12a is attenuated so as to produce a attenuated second composed optical signal 12b comprising an attenuated carrier signal $f_{tb}$. The attenuation of the carrier signal $f_{ta}$ may e.g. be accomplished by a narrowband band-rejection optical filter centered at the center frequency of the carrier signal $f_{ta}$. Alternatively, in case the composed optical signal 12b will be transmitted by means of a Mach-Zehnder transmitter an attenuation of the carrier signal $f_{ta}$ may e.g. be accomplished by adjusting the bias of the Mach-Zehnder transmitter.

The attenuation of the carrier signal $f_{tb}$ makes it possible to increase the power allocated to the sidebands Sb1 to Sbn of the composed signal 12b without exceeding the maximum optical power that is allowed to be transmitted into the optical fiber 40. Preferably the optical power allocated to the sidebands Sb1, Sbn is increased in an amount that correspond to the amount in which the optical power of the carrier signal $f_{ta}$ of the signal 12a has been decreased, while still not exceeding the maximum optical power that is allowed to be transmitted into the optical fiber 40. For example, the optical power allocated to the sidebands Sb1, Sbn may be increased in a lesser amount or in a substantially the same amount as the amount in which the optical power of the carrier signal $f_{ta}$ has been decreased.

In a fourth step S4 the attenuated composed optical signal 12b is transmitted via a fiber arrangement 40. The attenuated signal 12b may e.g. be transmitted by an optical transmitter OT1 as previously described, and the fiber arrangement 40 may be any optical fiber suitable for transmitting a composed optical signal 12a, 12b or similar.

In a fifth step S5 the transmitted attenuated composed optical signal 12b is received. It is preferred that the composed optical signal 12b is received by an optical receiver system as the optical receiver system 300a or 300b previously described or similar.

In a sixth step S6 the received composed optical signal 12b is amplified and detected.

It is preferred that the attenuated carrier signal $f_{tb}$ of the signal 12b is amplified so as to provide an amplified third composed optical signal 12a' or 12b' comprising an amplified carrier $f_{ta'}$ (c.f. the first composed optical signal 12a in Fig. 1a and the second composed optical signal 12b in Fig. 2a-3). The amplification may e.g. be performed by a SOA or a Brillouin amplifier as previously described.

A seventh step S7 takes care of the concluding measures of the method. One concluding measure is to detect the received and amplified composed optical signal 12a', 12b' and convert the optical signal to an electrical signal. It is preferred that the detection is performed by an optical receiver OR1 based on a direct detection, e.g. utilizing a single photo diode or a similar detector as previously described with reference to Fig. 1 a. A direct detection is simple to implement and it reduces the cost of the optical receiver OR1.

In view of the above description it can be concluded that:

The optical communication system 100a; 100b may have a transmitter system 200a configured to create and transmit a composed optical signal 12b such that the optical power of the transmitted composed optical signal 12b is substantially equal to the maximum optical power that is allowed to be transmitted into the optical fiber 40; 400.

The optical communication system 100a; 100b may have a transmitter system 200a configured to create and transmit a composed optical signal 12b such that the fraction of the optical power allocated to the sidebands Sb1, Sbn is above 30% of the maximum optical power allowed to be transmitted into the optical fiber arrangement 40; 400.

The optical communication system 100a; 100b may have transmitter system 200a configured to attenuate the power of the first carrier signal $f_{ta}$ by means of an optical band-rejection filter or by means of an optical Mach-Zehnder transmitter with an operatively adjusted bias.

The optical communication system 100a; 100b may have a transmitter system 200a configured to create and transmit a composed optical signal 12b in the form of a Subcarrier Multiplexed Signal by operatively mixing at least one modulated signal Fe1, Fen with a single-frequency signal $f_{mod}$. Indeed, the transmitter system 200a may be configured to create said modulated signal Fe1, Fen by operatively modulate a another single frequency signal F1, Fn by means of Quadrature Phase-Shift Keying, QPSK or a modulation of higher order.

The present invention has now been described with reference to exemplifying embodiments. However, the invention is not limited to the embodiments described herein. On the contrary, the full extent of the invention is only determined by the scope of the appended claims.

**Claims**

1. A method for transmitting a composed optical signal (12b) through an optical fiber arrangement (40; 400), comprising the steps of:

   - creating and transmitting a composed optical signal (12b) comprising; one or several sidebands (Sb1, Sbn) each substantially centered around a subcarrier (f1, fn), and an attenuated carrier signal ($f_{tb}$) of the composed optical signal (12b) **characterized in that** it is attenuated such that the composed optical signal (12b) is not linearly detectable by means of optical direct detection, wherein the composed optical signal (12b) is a result of a heterodyne process, and
   - receiving the transmitted composed optical signal (12b) and amplifying the power of the attenuated carrier signal ($f_{tb}$) so as to create an amplified composed optical signal (12a'; 12b') that is linearly detectable by means of optical direct detection.

2. The method according to claim 1 wherein:

   the power of the attenuated carrier signal ($f_{tb}$) is amplified while the sidebands (Sb1, Sbn) of the composed optical signal (12b) are substantially unaffected.

3. The method according to any one of claim 1 or 2 wherein:

   the power of the attenuated carrier signal ($f_{tb}$) is amplified by a narrowband amplification arrangement 32a having with its amplification centered at the center frequency of the carrier signal ($f_{tb}$).

4. The method according to claim 1 comprising the steps of:

   creating and transmitting a composed optical signal (12b) such that the optical power of the transmitted the composed optical signal (12b) is substantially equal to the maximum optical power that is allowed to be transmitted into the optical fiber (40; 400).

5. The method according to any one of claim 1, 2, 3 or 4 comprising the steps of:

   creating and transmitting a composed optical signal (12b) wherein the fraction of the optical power allocated to the sidebands (Sb1, Sbn) in the transmitted composed optical signal is above 30% of the maximum optical power allowed to be transmitted into the optical fiber arrangement (40; 400).

6. The method according to claim 1 comprising the steps of:

attenuating the power of the first carrier signal ($f_{ta}$) by means of an optical band-rejection filter or by adjusting the bias of an optical Mach-Zehnder transmitter.

7. The method according to any one of claim 1-6
comprising the steps of:

creating and transmitting a composed optical signal (12b) in the form of a Subcarrier Multiplexed Signal by mixing at least one modulated signal (Fe1, Fen) with a single-frequency signal ($f_{mod}$).

8. The method according to claim 7
comprising the steps of:

creating said modulated signal (Fe1, Fen) by modulating a another single frequency signal (F1, Fn) by means of Quadrature Phase-Shift Keying, QPSK or a modulation of higher order.

9. An optical communication system (100a; 100b) comprising

- an optical transmitter system (200a),
- an optical receiver system (300a; 300b), and
- an optical fiber arrangement (40; 400) connecting the transmitter system (200a) and the receiver system (300a; 300b),

wherein:

- the transmitter system (200a) is configured to create and transmit a composed optical signal (12b) comprising; one or several sidebands (Sb1, Sbn) each substantially centered around a subcarrier (f1, fn), and an attenuated carrier signal ($f_{tb}$) of the composed optical signal (12b) attenuated such that the composed optical signal (12b) **characterized in that** it is is not linearly detectable by means of direct detection, wherein the composed optical signal (12b) is a result of a heterodyne process, and
- the receiver system (300a; 300b) comprises an optical amplification arrangement (32a; 32b) configured to receive the transmitted composed optical signal (12b) and to amplify the power of the attenuated carrier signal ($f_{tb}$) so as to create an amplified composed optical signal (12a'; 12b') that is lineary detectable by means of optical direct detection.

10. An optical transmitter (200a) configured to create and transmit a composed optical signal (12a) comprising a carrier signal ($f_{ta}$) and one or several sidebands (Sb1, Sbn) each substantially centered around a subcarrier (f1, fn), where the composed optical signal (12b) is a result of a heterodyne process, and
**characterized in that**
the transmitter (200a) comprises an attenuating arrangement (20a) configured to attenuate the carrier signal *($f_{ta}$)* so as to create an attenuated composed optical signal (12b) that is not linearly detectable by means of optical direct detection.

11. An optical receiver (300a; 300b) comprising an optical receiver arrangement (30) configured to receive via an optical fiber arrangement (40; 400) a composed optical signal (12b) comprising; one or several sidebands (Sb1, Sbn) each substantially centered around a subcarrier (f1, fn) carrier signal *($f_{tb}$)*, and where the composed optical signal (12b) is a result of a heterodyne process, **characterized in that** the attenuated carries signal ($f_{tb}$) is attenuated such that the composed optical signal (12b) is not linearly detectable by means of optical direct detection and wherein:

the receiver (300a; 300b) comprises an optical amplification arrangement (32a; 32b) configured to receive the composed optical signal (12b) and to amplify the power of the carrier signal ($f_{tb}$) so as to create an amplified composed optical signal (12a'; 12b') that is linearly detectable by means of optical direct detection.

12. The optical receiver (300a; 300b) according to claim 11,
wherein:

the optical amplification arrangement (32a; 32b) is a Semiconductor Optical Amplifier (32a) or a Brillouin amplifier (32b).

**13.** The optical receiver (300a; 300b) according to claim 12, wherein:

the Brillouin amplifier (32b) comprises an optical pump source (322) and an optical directional arrangement (326), configured so as to operatively transmit an optical pump signal ($f_p$) into said optical fiber arrangement (40; 400) in a first direction such that the pump signal ($f_p$) operatively cause a Brillouin amplification of said carrier signal ($f_{tb}$) of the composed optical signal (12b) received from said optical fiber arrangement (40; 400) in a second opposite direction.

**14.** The optical receiver (300a; 300b) according to any one of claim 12-13, wherein:

the Brillouin amplifier (32b) staggers the pump signal ($f_p$) so as to broaden the effective bandwidth of the Brillouin amplification.

**15.** The optical receiver (300a; 300b) according to any one of claim 12-14. wherein:

the Brillouin amplifier (32b) comprises a filter arrangement (34) configured to operatively attenuate a backscatter signal ($f_{bs}$) caused by the pump signal ($f_p$) in addition to the Brillouin amplification of the carrier signal ($f_{tb}$).

**Patentansprüche**

**1.** Verfahren zum Übertragen eines zusammengesetzten optischen Signals (12b) über eine Lichtleitfaseranordnung (40; 400), umfassend folgende Schritte:

- Erstellen und Übertragen eines zusammengesetzten optischen Signals (12b), umfassend: ein oder mehrere Seitenbänder (Sb1, Sbn), die jeweils um einen Zwischenträger (f1, fn) herum im Wesentlichen zentriert sind, und ein gedämpftes Trägersignal ($f_{tb}$) des zusammengesetzten optischen Signals (12b), **dadurch gekennzeichnet, dass** es derart gedämpft ist, dass das zusammengesetzte optische Signal (12b) anhand einer optischen direkten Detektion nicht linear erkennbar ist, wobei das zusammengesetzte optische Signal (12b) das Ergebnis eines Überlagerungsprozesses ist, und
- Empfangen des übertragenen zusammengesetzten optischen Signals (12b) und Verstärken der Leistung des gedämpften Trägersignals ($f_{tb}$), um ein verstärktes zusammengesetztes optisches Signal (12a'; 12b') zu erstellen, das anhand einer optischen direkten Detektion linear erkennbar ist.

**2.** Verfahren nach Anspruch 1, wobei die Leistung des gedämpften Trägersignals ($f_{tb}$) verstärkt wird, während die Seitenbänder (Sb1, Sbn) des zusammengesetzten optischen Signals (12b) im Wesentlichen nicht betroffen sind.

**3.** Verfahren nach einem der Ansprüche 1 oder 2, wobei die Leistung des gedämpften Trägersignals ($f_{tb}$) durch eine Schmalband-Verstärkungsanordnung (32a) verstärkt wird, deren Verstärkung um die Mittenfrequenz des Trägersignals ($f_{tb}$) herum zentriert ist.

**4.** Verfahren nach Anspruch 1, umfassend folgende Schritte:

Erstellen und Übertragen eines zusammengesetzten optischen Signals (12b), so dass die optische Leistung des übertragenen zusammengesetzten optischen Signals (12b) im Wesentlichen gleich der maximalen optischen Leistung ist, die in die Lichtleitfaser (40; 400) übertragen werden darf.

**5.** Verfahren nach einem der Ansprüche 1, 2, 3 oder 4, umfassend folgende Schritte:

Erstellen und Übertragen eines zusammengesetzten optischen Signals (12b), wobei der Anteil der optischen Leistung, die den Seitenbändern (Sb1, Sbn) in dem übertragenen zusammengesetzten optischen Signal zugeteilt ist, über 30 % der maximalen optischen Leistung beträgt, die in die Lichtleitfaseranordnung (40; 400) übertragen werden darf.

**6.** Verfahren nach Anspruch 1, umfassend folgenden Schritt:

Dämpfen der Leistung des ersten Trägersignals ($f_{ta}$) anhand eines optischen Bandsperrfilters oder durch Anpassen der Vorspannung eines optischen Mach-Zehnder-Senders.

7. Verfahren nach einem der Ansprüche 1 bis 6, umfassend folgende Schritte:

Erstellen und Übertragen eines zusammengesetzten optischen Signals (12b) in Form eines Zwischenträger-Multiplexsignals durch Mischen mindestens eines modulierten Signals (Fe1, Fen) mit einem Einzelfrequenzsignal ($f_{mod}$).

8. Verfahren nach Anspruch 7, umfassend folgenden Schritt:

Erstellen des modulierten Signals (Fe1, Fen) durch Modulieren eines anderen Einzelfrequenzsignals (F1, Fn) anhand von Quadratur-Phasenumtastung, QPSK, oder einer Modulation höherer Ordnung.

9. Optisches Kommunikationssystem (100a; 100b), umfassend:

- ein optisches Sendersystem (200a),
- ein optisches Empfängersystem (300a; 300b), und
- eine Lichtleitfaseranordnung (40; 400), die das Sendersystem (200a) mit dem Empfängersystem (300a; 300b) verbindet,

wobei:

- das Sendersystem (200a) konfiguriert ist, um ein zusammengesetztes optisches Signal (12b) zu erstellen und zu übertragen, umfassend: ein oder mehrere Seitenbänder (Sb1, Sbn), die jeweils um einen Zwischenträger (f1, fn) herum im Wesentlichen zentriert sind, und ein gedämpftes Trägersignal ($f_{tb}$) des zusammengesetzten optischen Signals (12b), das derart gedämpft ist, dass das zusammengesetzte optische Signal (12b) **dadurch gekennzeichnet ist, dass** es anhand einer optischen direkten Detektion nicht linear erkennbar ist, wobei das zusammengesetzte optische Signal (12b) das Ergebnis eines Überlagerungsprozesses ist, und
- das Empfängersystem (300a; 300b) eine optische Verstärkungsanordnung (32a; 32b) umfasst, die konfiguriert ist, um das übertragene zusammengesetzte optische Signal (12b) zu empfangen und die Leistung des gedämpften Trägersignals ($f_{tb}$) zu verstärken, um ein verstärktes zusammengesetztes optisches Signal (12a; 12b') zu erstellen, das anhand einer optischen direkten Detektion linear erkennbar ist.

10. Optischer Sender (200a), der konfiguriert ist, um ein zusammengesetztes optisches Signal (12a) zu erstellen und zu übertragen, das ein Trägersignal ($f_{ta}$) und ein oder mehrere Seitenbänder (Sb1, Sbn) umfasst, die jeweils um einen Zwischenträger (f1, fn) herum im Wesentlichen zentriert sind, wobei das zusammengesetzte optische Signal (12b) das Ergebnis eines Überlagerungsprozesses ist, und **dadurch gekennzeichnet, dass** der Sender (200a) eine Dämpfungsanordnung (20a) umfasst, die konfiguriert ist, um das Trägersignal ($f_{ta}$) zu dämpfen, um ein gedämpftes zusammengesetztes optisches Signal (12b) zu erstellen, das anhand einer optischen direkten Detektion nicht linear erkennbar ist.

11. Optischer Empfänger (300a; 300b), umfassend eine optische Empfängeranordnung (30), die konfiguriert ist, um über eine Lichtleitfaseranordnung (40; 400) ein zusammengesetztes optisches Signal (12b) zu empfangen, umfassend: ein oder mehrere Seitenbänder (Sb1, Sbn), die jeweils um einen Zwischenträger (f1, fn) herum im Wesentlichen zentriert sind, ein gedämpftes Trägersignal ($f_{tb}$), und wobei das zusammengesetzte optische Signal (12b) das Ergebnis eines Überlagerungsprozesses ist, **dadurch gekennzeichnet, dass** das gedämpfte Trägersignal ($f_{tb}$) derart gedämpft ist, dass das zusammengesetzte optische Signal (12b) anhand einer optischen direkten Detektion nicht linear erkennbar ist, und wobei der Empfänger (300a; 300b) eine optische Verstärkungsanordnung (32a; 32b) umfasst, die konfiguriert ist, um das zusammengesetzte optische Signal (12b) zu empfangen und die Leistung des Trägersignals ($f_{tb}$) derart zu verstärken, dass ein verstärktes zusammengesetztes optisches Signal (12a'; 12b') erstellt wird, das anhand einer optischen direkten Detektion linear erkennbar ist.

12. Optischer Empfänger (300a; 300b) nach Anspruch 11, wobei:

die optische Verstärkungsanordnung (32a; 32b) ein optischer Halbleiter-Verstärker (32a) oder ein Brillouin-Verstärker (32b) ist.

**13.** Optischer Empfänger (300a; 300b) nach Anspruch 12, wobei:

der Brillouin-Verstärker (32b) eine optische Pumpquelle (322) und eine optische richtungsabhängige Anordnung (326) umfasst, die konfiguriert ist, um betriebsmäßig ein optisches Pumpsignal ($f_p$) in einer ersten Richtung in die Lichtleitfaseranordnung (40; 400) zu übertragen, so dass das Pumpsignal ($f_p$) betriebsmäßig eine Brillouin-Verstärkung des Trägersignals ($f_{tb}$) des zusammengesetzten optischen Signals (12b) veranlasst, das von der Lichtleitfaseranordnung (40; 400) in einer zweiten entgegengesetzten Richtung empfangen wird.

**14.** Optischer Empfänger (300a; 300b) nach einem der Ansprüche 12 und 13, wobei:

der Brillouin-Verstärker (32b) das Pumpsignal ($f_p$) staffelt, um die effektive Bandbreite der Brillouin-Verstärkung breiter zu machen.

**15.** Optischer Empfänger (300a; 300b) nach einem der Ansprüche 12 bis 14, wobei:

der Brillouin-Verstärker (32b) eine Filteranordnung (34) umfasst, die konfiguriert ist, um ein Rückstreusignal ($f_{bs}$), das durch das Pumpsignal ($f_p$) zusätzlich zu der Brillouin-Verstärkung des Trägersignals ($f_{tb}$) verursacht wird, betriebsmäßig zu dämpfen.

## Revendications

**1.** Procédé de transmission d'un signal optique composé (12b) par le biais d'un ensemble à fibre optique (40 ; 400), qui comprend les étapes consistant à :

- créer et transmettre un signal optique composé (12b) qui comprend : une ou plusieurs bande(s) latérale(s) (Sb1, Sbn) chacune sensiblement centrée autour d'une sous-porteuse (f1, fn), et un signal porteur atténué ($f_{tb}$) dudit signal optique composé (12b), **caractérisé en ce qu'**il est atténué de sorte que ledit signal optique composé (12b) ne soit pas linéairement détectable à l'aide d'une détection optique directe, ledit signal optique composé (12b) étant le résultat d'un processus hétérodyne, et
- recevoir ledit signal optique composé transmis (12b) et amplifier la puissance dudit signal porteur atténué ($f_{tb}$) de façon à créer un signal optique composé amplifié (12a' ; 12b') qui est linéairement détectable à l'aide d'une détection optique directe.

**2.** Procédé selon la revendication 1, dans lequel :

la puissance dudit signal porteur atténué ($f_{tb}$) est amplifiée, alors que les bandes latérales (Sb1, Sbn) dudit signal optique composé (12b) sont sensiblement non affectées.

**3.** Procédé selon l'une quelconque des revendications 1 ou 2, dans lequel :

la puissance dudit signal porteur atténué ($f_{tb}$) est amplifiée par un système d'amplification à bande étroite (32a) dont l'amplification est centrée au niveau de la fréquence centrale dudit signal porteur ($f_{tb}$).

**4.** Procédé selon la revendication 1, qui comprend les étapes consistant à :

créer et transmettre un signal optique composé (12b) de sorte que la puissance optique dudit signal optique composé transmis (12b) soit sensiblement égale à la puissance optique maximale qui peut être transmise à ladite fibre optique (40 ; 400).

**5.** Procédé selon l'une quelconque des revendications 1, 2, 3, ou 4, qui comprend les étapes consistant à :

créer et transmettre un signal optique composé (12b), dans lequel la fraction de la puissance optique attribuée auxdites bandes latérales (Sb1, Sbn) dans ledit signal optique composé transmis est supérieure à 30% de la puissance optique maximale qui peut être transmise audit ensemble à fibre optique (40 ; 400).

**6.** Procédé selon la revendication 1, qui comprend les étapes consistant à :

atténuer la puissance du premier signal porteur ($f_{ta}$) à l'aide d'un filtre à rejet de bande optique ou en ajustant la polarisation d'un émetteur optique de Mach-Zehnder.

7. Procédé selon l'une quelconque des revendications 1 à 6, qui comprend les étapes consistant à :

créer et transmettre un signal optique composé (12b) sous la forme d'un signal multiplexé de sous-porteuse en mélangeant au moins un signal modulé (Fe1, Fen) avec un signal à fréquence unique ($f_{mod}$).

8. Procédé selon la revendication 7, qui comprend les étapes consistant à :

créer ledit signal modulé (*Fe1, Fen*) en modulant un autre signal à fréquence unique (F1, Fn) à l'aide d'un QPSK (déplacement de phase en quadrature) ou d'une modulation d'ordre plus élevé.

9. Système de communication optique (100a ; 100b) qui comprend

- un émetteur optique (200a),
- un récepteur optique (300a ; 300b), et
- un ensemble à fibre optique (40 ; 400) qui relie ledit émetteur (200a) et ledit récepteur (300a ; 300b),

dans lequel :

- ledit émetteur (200a) est configuré pour créer et transmettre un signal optique composé (12b) qui comprend : une ou plusieurs bande(s) latérale(s) (Sb1, Sbn) chacune sensiblement centrée autour d'une sous-porteuse (f1, fn), et un signal porteur atténué ($f_{tb}$) dudit signal optique composé (12b), **caractérisé en ce qu'**il est atténué de sorte que ledit signal optique composé (12b) ne soit pas linéairement détectable à l'aide d'une détection directe, dans lequel ledit signal optique composé (12b) est le résultat d'un processus hétérodyne, et
- ledit récepteur (300a ; 300b) comprend un ensemble d'amplification optique (32a ; 32b) configuré pour recevoir ledit signal optique composé transmis (12b) et pour amplifier la puissance dudit signal porteur atténué (*$f_{tb}$*) de façon à créer un signal optique composé amplifié (12a' ; 12b') qui soit linéairement détectable à l'aide d'une détection optique directe.

10. Emetteur optique (200a) configuré pour créer et transmettre un signal optique composé (12a) qui comprend un signal porteur ($f_{ta}$) et une ou plusieurs bande(s) latérale(s) (Sb1, Sbn) chacune sensiblement centrée autour d'une sous-porteuse (f1, fn), dans lequel ledit signal optique composé (12b) est le résultat d'un processus hétérodyne, et **caractérisé en ce que**
ledit émetteur (200a) comprend un ensemble d'atténuation (20a) configuré pour atténuer ledit signal porteur ($f_{ta}$) de façon à créer un signal optique composé atténué (12b) qui ne soit pas linéairement détectable par une détection optique directe.

11. Récepteur optique (300a ; 300b) qui comprend un ensemble de réception optique (30) configuré pour recevoir, via un ensemble à fibre optique (40 ; 400), un signal optique composé (12b) qui comprend : une ou plusieurs bande(s) latérale(s) (Sb1, Sbn) chacune sensiblement centrée autour d'une sous-porteuse (f1, fn) et un signal porteur atténué ($f_{tb}$), dans lequel ledit signal optique composé (12b) est le résultat d'un processus hétérodyne, **caractérisé en ce que** ledit signal porteur atténué (*$f_{tb}$*) est atténué de sorte que ledit signal optique composé (12b) ne soit pas linéairement détectable à l'aide d'une détection optique directe, et dans lequel :

Ledit récepteur (300a ; 300b) comprend un ensemble d'amplification optique (32a ; 32b) configuré pour recevoir ledit signal optique composé (12b) et pour amplifier la puissance dudit signal porteur (*$f_{tb}$*) de façon à créer un signal optique composé amplifié (12a' ; 12b') qui soit linéairement détectable par une détection optique directe.

12. Récepteur optique (300a ; 300b) selon la revendication 11, dans lequel :

ledit ensemble d'amplification optique (32a ; 32b) est un amplificateur optique à semi-conducteurs (32a) ou un amplificateur de Brillouin (32b).

13. Récepteur optique (300a ; 300b) selon la revendication 12, dans lequel :

ledit amplificateur de Brillouin (32b) comprend une source à pompage optique (322) et un ensemble directionnel optique (326), configuré de façon à transmettre un signal de pompage optique ($f_p$) audit ensemble à fibre optique (40 ; 400) dans une première direction, de sorte que ledit signal de pompage ($f_p$) provoque une amplification de Brillouin dudit signal porteur ($f_{tb}$) dudit signal optique composé (12b) reçu de la part dudit ensemble à fibre optique (40 ; 400) dans une seconde direction opposée.

14. Récepteur optique (300a ; 300b) selon l'une quelconque des revendications 12 ou 13, dans lequel :

ledit amplificateur de Brillouin (32b) étale ledit signal de pompage ($f_p$) de façon à élargir la bande efficace de ladite amplification de Brillouin.

15. Récepteur optique (300a ; 300b) selon l'une quelconque des revendications 12 à 14, dans lequel :

ledit amplificateur de Brillouin (32b) comprend un filtre (34) configuré pour atténuer un signal de rétrodiffusion ($f_{bs}$) provoqué par ledit signal de pompage ($f_p$) en plus de ladite amplification de Brillouin dudit signal porteur ($f_{tb}$).

**Fig. 1a**

**Fig. 1b**

**Fig. 2a**

Fig. 2b

Fig. 3

S1 — START

S2 — Create
Composed
Optical Signal

S3 — Reduce Power of
Carrier in
Composed Signal

S4 — Transmit
Composed Signal

S5 — Receive
Composed Signal

S6 — Amplify Power of
Carrier in
Composed Signal

S7 — END

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Subcarrier Multiplexing for High-Speed Optical Transmission. **RONGQING HUI et al.** JOURNAL OF LIGHTWAVE TECHNOLOGY. IEEE SERVICE CENTER, 01 March 2002, vol. 20

- Optical SCM Data Extraction Using a Fiber-Loop Mirror for WDM Network Systems. **GIAMMARCO ROSSI et al.** IEEE PHOTONICS TECHNOLOGY LETTERS. IEEE SERVICE CENTER, 01 July 2000, vol. 12